# EUROPÄISCHE PATENTSCHRIFT

(11) **EP 2 473 954 B1**
(45) Veröffentlichungstag und Bekanntmachung des Hinweises auf die Patenterteilung: **21.02.2018**
(21) Anmeldenummer: 10724092.1
(22) Anmeldetag: 16.06.2010
(51) Int. Cl.: G06Q 10/08

(54) **VERFAHREN ZUR ÜBERPRÜFUNG EINER WARE ALS ORIGINALWARE EINES WARENHERSTELLERS**
METHOD FOR INSPECTING A PRODUCT AS AN ORIGINAL PRODUCT OF A PRODUCT PRODUCER
PROCÉDÉ PERMETTANT DE VÉRIFIER QU'UN ARTICLE EST UN ARTICLE ORIGINAL DU FABRICANT DE L'ARTICLE

(30) Priorität: 02.09.2009 DE 102009039823
(43) Veröffentlichungstag der Anmeldung: 11.07.2012
(73) Patentinhaber: Siemens Aktiengesellschaft, 80333 München (DE)
(72) Erfinder: SCHATTLEITNER, Angela, 83104 Tuntenhausen (DE); SEUSCHEK, Hermann, 80634 München (DE)
(86) Internationale Anmeldenummer: PCT/EP2010/058454
(87) Internationale Veröffentlichungsnummer: WO 2011/026665

(56) Entgegenhaltungen:
- EP-A2- 2 081 353
- MINGYAN LI ET AL: "MULTI-DOMAIN RFID ACCESS CONTROL USING ASYMMETRIC KEY BASED TAG-READER MUTUAL AUTHENTICATION" 26TH INTERNATIONAL CONGRESS OF THE AERONAUTICAL SCIENCES,, 14. September 2008 (2008-09-14), Seiten 1-10, XP007915326
- FALK R ET AL: "Simulating a Multi-domain RFID System for Replacement Part Tracking" EMERGING SECURITY INFORMATION, SYSTEMS AND TECHNOLOGIES, 2009. SECURWARE '09. THIRD INTERNATIONAL CONFERENCE ON, IEEE, PISCATAWAY, NJ, USA, 18. Juni 2009 (2009-06-18), Seiten 197-202, XP031516738 ISBN: 978-0-7695-3668-2
- SARMA S E ET AL: "RFID Systems and Security and Privacy Implications" PARALLEL AND DISTRIBUTED PROCESSING AND APPLICATIONS: SECOND INTERNATIONAL SYMPOSIUM, ISPA 2004 PROCEEDINGS, HONG KONG, CHINA, DECEMBER 13 - 15, 2004 (IN: LECTURE NOTES IN COMPUTER SCIENCES), SPRINGER, DE, [Online] Bd. 2523, 31. Dezember 2002 (2002-12-31), Seiten 454-469, XP002580190 ISBN: 978-3-540-24128-7 Gefunden im Internet: URL:http://saweis.net/pdfs/ches-rfid.pdf>

## Beschreibung

Die Erfindung betrifft ein Verfahren und ein System zur Überprüfung einer Ware als Originalware eines Warenherstellers durch Authentifikation mindestens eines der Ware zugeordneten RFID (Radio Frequency Identification)-Tags unter Verwendung eines asymmetrischen Challenge-Response-Protokolls.

Bei der Wareneingangskontrolle wird eingehende Ware in der Regel einer Abnahmekontrolle unterworfen, bei der die gelieferte Ware nach Menge und Qualität überprüft wird. Dies geschieht entweder stichprobenartig oder es wird der komplette Wareneingang kontrolliert. Gleiches gilt im Prinzip für Zollkontrollen, bei denen ein Abgleich zwischen ein- oder auszuführenden Waren mit der Zollanmeldung vorgenommen wird.

Bei mit RFID-Tags bestückten Packeinheiten gibt es die Möglichkeit an Stelle der manuellen physikalischen Kontrolle eine automatisierte Kontrolle mit Hilfe eines RFID-Lesegerätes durchzuführen. Hierdurch wird das Überprüfen von vielen Packeinheiten in kurzer Zeit möglich (Bulk Reading).

In der EP 2 081 353 A2 wird ein System und Verfahren zur Authentifizierung und digitalen Signatur offenbart. Bei dem beschriebenen Authentifizierungsprotokoll wird von dem zu Prüfenden eine Authentifizierungsanfrage an die bestätigende Stelle gesendet. Der zu Prüfende, bspw. ein RFID-Tag, umfasst einen Nur-Lese-Speicher, auf dem ein öffentlicher Schlüssel des RFID-Tags gespeichert ist. Diese Authentifizierungsanfrage enthält den öffentlichen Schlüssel und das Zertifikat des RFID-Tags der aus dem Nur-Lese-Speicher ausgelesen wurde.

Der Artikel "MULTI-DOMAIN RFID ACCESS CONTROL USING ASYMMETRIC KEY BASED TAG-READER MUTUAL AUTHENTICATION", 26TH INTERNATIONAL CONGRESS OF THE AERONAUTICAL SCIENCES, 14. September 2008 (2008-09-14), Seiten 1-10, von Mingyan Li et al beschreibt ein bzw. mehrere Verfahren zur Zugangskontrolle eines RFID-Tags mittels eines asymmetrischen Verschlüsselungsverfahrens. Dabei authentisieren sich ein RFID-Leser und ein Backend-Server gegenseitig.

Im Rahmen einer derartigen automatisierten Qualitäts- und Quantitätskontrolle wird jedoch nicht zwischen echten und gefälschten Produkten unterschieden. Vor dem Hintergrund stetig zunehmender Probleme mit Produktpiraterie, insbesondere auch durch die weitere Ausdehnung und Liberalisierung des weltweiten Handels, wäre eine automatisierte und zuverlässige Überprüfung der Echtheit von Waren jedoch äußerst wünschenswert.

Der vorliegenden Erfindung liegt somit die Aufgabe zugrunde, ein Verfahren zur automatisierten Überprüfung von Waren bei der Annahme oder bei Zollkontrollen zur Verfügung zu stellen, mit dem zuverlässig die Echtheit der Waren kontrolliert wird.

Diese Aufgabe wird durch ein Verfahren und ein System mit den Merkmalen der Ansprüche 1 und 2 gelöst. Vorteilhafte Weiterbildungen der Erfindung sind in den abhängigen Ansprüchen angegeben.

Das erfindungsgemäße Verfahren zur Überprüfung einer Ware als Originalware eines Warenherstellers authentifiziert mindestens ein der Ware zugeordnetes RFID-Tag unter Verwendung eines asymmetrischen Challenge-Response-Protokolls. Zunächst wird ein Produktcode aus dem RFID-Tag ausgelesen und ein zugeordneter elektronischer Lieferschein ermittelt. Anschließend wird eine Challenge basierend auf einer Zufallszahl und einem öffentlichen Schlüssel generiert und an das RFID-Tag drahtlos übermittelt. Das RFID-Tag ermittelt eine Response auf Basis der übermittelten Challenge und eines ersten geheimen Schlüssels, welcher dem RFID-Tag zugeordnet ist. Die ermittelte Response wird zur Ermittlung eines Authentifikationsergebnisses überprüft und das Authentifikationsergebnis in den elektronischen Lieferschein eingeschrieben.

Erfindungsgemäß wird demnach vorgeschlagen, RFID-Tags einer Ware mit einem privaten PKI-Schlüssel (Private Key Infrastructure) auszustatten und mit der Ware irreversibel zu verbinden. Im elektronischen Lieferschein oder der elektronischen Zollanmeldung ist der korrespondierende Datensatz zur Authentifizierung (Public Key) des RFID-Tags enthalten. Auf diese Weise wird in vorteilhafter Weise mit kryptographischen Methoden die Echtheit der Ware verifiziert.

In vorteilhafter Weise wird zudem die vorgeschlagene Plagiatschutzprüfung nahtlos in bestehende Geschäftsprozesse integriert. So wird bei der Wareneingangskontrolle zeitgleich auch die Plagiatschutzprüfung durchgeführt. Im Warenwirtschaftssystem wird der aktuelle Lieferstatus der Ware verzeichnet. Diese Informationen können einen Qualitätsmanagementprozess zusätzlich unterstützen.

In einer Variante, die nicht Teil der Erfindung ist, ist ein digitales Zertifikat umfassend den öffentlichen Schlüssel auf dem RFID-Tag gespeichert. Das digitale Zertifikat wird ausgelesen und die Echtheit des digitalen Zertifikats wird überprüft.

In dieser Variante sind auf dem zu überprüfenden RFID-Tag der private Schlüssel und ein zugehöriges digitales Zertifikat gespeichert. Das digitale Zertifikat umfasst dabei üblicherweise den öffentlichen Schlüssel, Zusatzinformationen und eine digitale Signatur. Das Auslesen des privaten Schlüssels wird durch Hardwaremaßnahmen verhindert. Das digitale Zertifikat hingegen kann ausgelesen werden. Es wird vor der Echtheitsprüfung durch ein RFID-Lesegerät gelesen und an eine Prüfeinheit übertragen. Dort wird die Echtheit des digitalen Zertifikats mit Hilfe der digitale Signatur geprüft. Wenn das digitale Zertifikat verifiziert wurde, wird das RFID-Tag mittels asymmetrischem Challenge-Response-Protokoll gemäß der beschriebenen Erfindung geprüft. Dabei wird mit Hilfe des öffentlichen Schlüssels das Vorhandensein des privaten Schlüssels geprüft, ohne dass dieser ausgelesen werden muss.

Gemäß der vorliegenden Erfindung ist der öffentliche Schlüssel aus dem elektronischen Lieferschein ermittelbar.

In der vorliegenden Erfindung wird das digitale Zertifikat nicht auf dem RFID-Tag gespeichert, sondern es ist im elektronischen Lieferschein für jede Wareneinheit eingetragen. In dieser Ausgestaltung wird das digitale Zertifikat nicht vom RFID-Tag eingelesen, sondern dem elektronischen Lieferschein entnommen. Die Prüfung wiederum erfolgt gemäß der beschriebenen Erfindung.

Das erfindungsgemäße System zur Überprüfung einer Ware als Originalware eines Herstellers authentifiziert mindestens einen der Ware zugeordneten RFID-Tag unter Verwendung eines asymmetrischen Challenge-Response-Protokolls gemäß dem beanspruchten Verfahren. Das System weist ein RFID-Lesegerät mit einem Kommunikationsmodul zur drahtlosen Kommunikation mit dem RFID-Tag auf. Weiterhin einen RFID-Tag mit einem Authentifizierungsmodul, welches zu einer empfangenen Challenge eine zugehörige Response ermittelt, und einem zweiten Kommunikationsmodul zur drahtlosen Kommunikation mit dem RFID-Lesegerät. Weiterhin ist ein zweites Authentifizierungsmodul zum Generieren einer Challenge und Überprüfen einer Response vorgesehen. Eine RFID-Middleware stellt schließlich elektronische Lieferscheine bereit.

Im Folgenden werden bevorzugte Ausführungsformen des erfindungsgemäßen Verfahrens und des erfindungsgemäßen Systems unter Bezugnahme auf die beigefügten Figuren zur Erläuterung erfindungswesentlicher Merkmale beschrieben. Es zeigt:
- Figur 1: in einer schematischen Darstellung Systemkomponenten einer möglichen Ausführungsform des erfindungsgemäßen Systems,
- Figur 2: in einer schematischen Darstellung Systemkomponenten einer weiteren möglichen Ausführungsform des erfindungsgemäßen Systems,
- Figur 3: in einem Blockschaltbild Funktionsblöcke eines RFID-Tags gemäß dem Stand der Technik,
- Figur 4: in einem Blockschaltbild Funktionsblöcke eines für die Erfindung geeigneten RFID-Tags,
- Figur 5: ein Ablaufdiagramm eines erfindungsgemäßen Challenge-Response-Protokolls zur Echtheitsprüfung.

Die Integration der Echtheitsprüfung von Waren in den allgemeinen Geschäftsprozess führt zu einem besseren Schutz vor Plagiaten, da die Prüfung an kritischen Stellen des Warenflusses erfolgt. Durch die vorgeschlagenen Maßnahmen kann die Prüfung auf Plagiate sehr effizient durchgeführt werden. Des Weiteren können Plagiate frühzeitig erkannt werden und erst gar nicht vom Lieferanten abgenommen werden. Somit entsteht ein erhebliches Einsparungspotential bei gleichzeitiger Steigerung der Qualität.

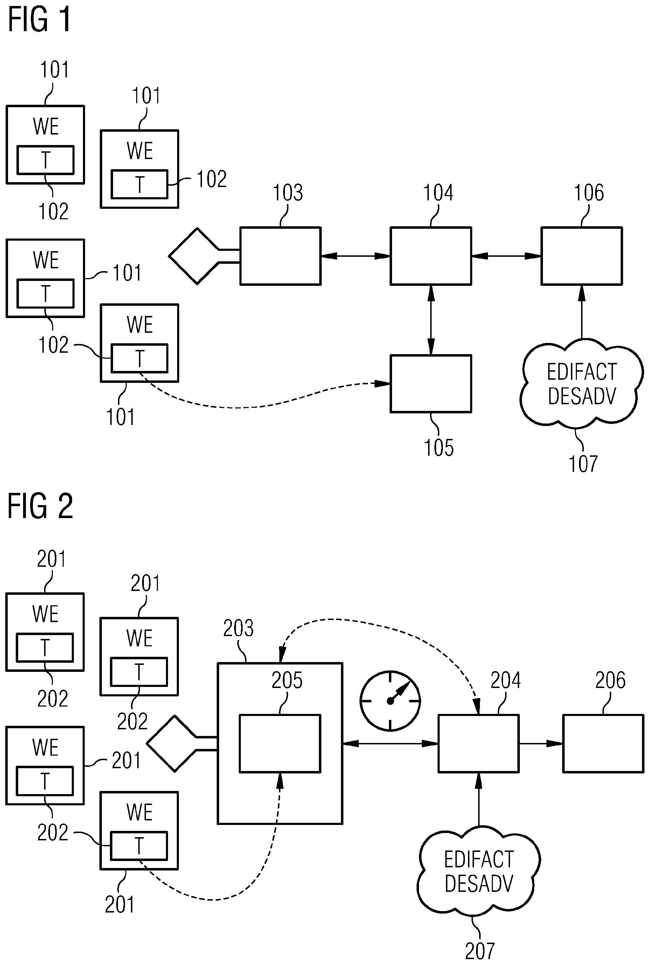

Die Figur 1 zeigt Systemkomponenten einer möglichen Ausführungsform des erfindungsgemäßen Systems. Die dargestellten Wareneinheiten 101 befinden sich beispielsweise an einer Wareneingangsstelle oder einer Zollabfertigungsstelle. Zur Überprüfung der Echtheit sind die Wareneinheiten 101 jeweils mit einem RFID Tag 102 versehen. Die RFID-Tags 102 können mit einem RFID-Lesegerät 103 kommunizieren. Dieses RFID-Lesegerät 103 ist über eine geeignete Schnittstelle mit einer RFID-Middleware 104 permanent verbunden. Die RFID-Middleware 104 wiederum ist mit einer Plagiatsschutzprüfeinheit 105 verbunden. Zudem hat die RFID-Middleware 104 Zugriff auf ein Warenwirtschaftssystem 106, über welches Zugriff auf die elektronischen Lieferscheine besteht 107.

Es wird angenommen, dass sich die RFID-Middleware 104, die Plagiatschutzprüfeinheit 105 und das Warenwirtschaftssystem 106 in einer gesicherten Umgebung befinden. Da sich die RFID-Tags 102 gegenüber der Plagiatschutzeinheit 105 authentifizieren, muss sich das RFID-Lesegerät 103 nicht zwangsläufig gegenüber der RFID-Middleware 104 authentifizieren. Die Authentifizierung der RFID-Tags 102 wird mit einem Challenge-Response-Authentifizierungsprotokoll vorgenommen. Im Warenwirtschaftssystem 106 werden die Daten aus den elektronischen Lieferscheinen mit den RFID-Daten abgeglichen. Eine Signalisierung bei Auftreten von Plagiaten oder bei deiner Fehllieferung kann am RFID-Lesegerät 103 oder an einem Terminal des Warenwirtschaftssystems 106 erfolgen.

Für manche Anwendungen ist die permanente Verfügbarkeit einer Online-Verbindung zwischen RFID-Lesegerät und RFID-Middleware nicht gegeben. Ein derartiges Szenario ist in Figur 2 gezeigt. In diesem Fall wird die Prüfung des Wareneingangs 201 offline durchgeführt. Besteht wieder eine Verbindung zur RFID-Middleware 204, können die Daten zeitverzögert abgeglichen werden.

In diesem Ausführungsbeispiel sind die elektronischen Lieferscheine vor der Warenlieferung verfügbar. Ein elektronischer Lieferschein 207 wird an die RFID-Middleware 204 ausgeliefert und dort gepuffert. Wenn sich ein RFID-Lesegerät 203 mit der Middleware 204 verbindet, werden die noch nicht bearbeiteten elektronischen Lieferscheine 207 an das RFID-Lesegerät 203 übertragen und dort gespeichert.

Das RFID-Lesegerät 203 erfasst nun offline den Wareneingang 201 und gleicht die Positionen mit dem elektronischen Lieferschein ab. Die Prüfung der Echtheit der Waren erfolgt mit Hilfe eines Authentifikationsverfahrens mit den RFID-Tags 202. In diesem Ausführungsbeispiel befindet sich die Plagiatschutzprüfeinheit 205 im RFID Lesegerät 203. Wenn eine Wareneinheit 201 als authentisch erkannt wurde, so wird der Datensatz im elektronischen Lieferschein mit dem privaten Schlüssel des RFID-Lesegeräts digital signiert. Die digitale Signatur wird als zusätzliches Attribut an den Lieferschein angehängt.

Nach der Wareneingangskontrolle hat man einen Lieferschein mit zusätzlichen Attributen zur Echtheitsprüfung und zum Wareneingang im mobilen RFID-Lesegerät 203 gespeichert. Dieser erweiterte Lieferschein wird bei der nächsten Verbindung mit der RFID-Middleware 204 an das Warenwirtschaftssystem 206 weitergereicht. Im Warenwirtschaftssystem 206 wird dann die eingegangene Ware verbucht und zum Beispiel eine elektronische Wareneingangsbestätigung versandt.

Geeignete Datenstrukturen für die Abbildung eines elektronischen Lieferscheins mit den entsprechenden Datenfeldern für die zusätzlichen Informationen pro Wareneinheit bieten die folgenden Standards.
- Un/EDIFACT (United Nations Electronic Data Interchange for Administration, Commerce and Transport): Hier könnte im Lieferschein (DESADV) das zum LIN (Line Item) Segment gehörende PIA (Additional Product ID) Segment den öffentlichen Schlüssel beziehungsweise das digitale Zertifikat für die Echtheitsprüfung enthalten sein. Auch in der elektronischen Zollanmeldung (COSDEC) im Rahmen des Atlas-IT-Verfahrens könnten die zusätzlichen kryptographischen Daten eine Echtheitsprüfung bei der Einfuhr ermöglichen.
- OpenTrans: Hier könnte im Lieferavis (Dispatch Notification) das Remark-Element zu einem Dispatch Notification Item das benötigte öffentliche Schlüsselmaterial beziehungsweise das digitale Zertifikat enthalten.

Für das asymmetrische Schlüsselmanagement bei der Authentizitätsprüfung der RFID-Tags werden zwei Verfahren vorgeschlagen.

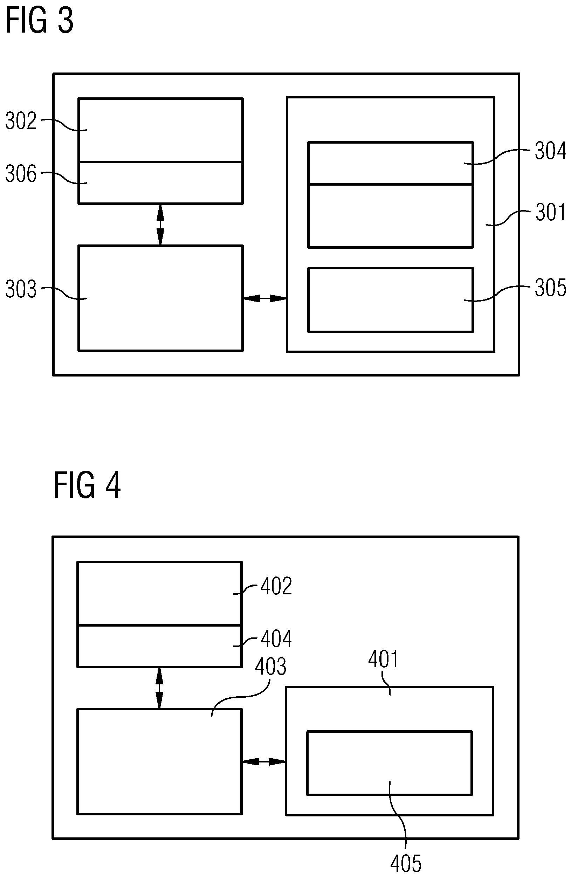

Ein mögliches, aber nicht erfindungsgemäßes Ausführungsbeispiel ist in Figur 3 dargestellt, auf der ein RFID Tag mit einem Speicher 301, einem Authentifikationsmodul 302 samt privatem Schlüssel 306 und einem Kommunikationsmodul 303 abgebildet ist. Hier wird das digitale Zertifikat 304 in dem Speicher 301 des RFID-Tags gespeichert. Neben einem Produktcode 305 sind folglich auf dem RFID Tag zusätzlich ein zugehöriges Zertifikat 304 umfassend den öffentlichen Schlüssel, Zusatzinformationen und einer digitalen Signatur gespeichert. Das Auslesen des privaten Schlüssels 306 wird durch Hardwaremaßnahmen verhindert. Das digitale Zertifikat kann ausgelesen werden und wird vor der Echtheitsprüfung vom RFID-Lesegerät gelesen und beispielsweise über die RFID-Middleware zur Plagiatschutzprüfeinheit übertragen. Dort wird die Echtheit des digitalen Zertifikats anhand der digitalen Signatur überprüft. Wenn das digitale Zertifikat verifiziert wurde, wird das RFID-Tag mittels asymmetrischem Challenge-Response-Protokoll überprüft. Dabei wird mit Hilfe des öffentlichen Schlüssels das Vorhandensein des privaten Schlüssels geprüft, ohne dass dieser ausgelesen werden muss.

Ein erfindungsgemäßes Ausführungsbeispiel ist in Figur 4 gezeigt, auf der ein RFID Tag mit einem Speicher 401, einem Authentifikationsmodul 402 samt privatem Schlüssel 404 und einem Kommunikationsmodul 404 abgebildet ist. Der Produktcode 405 ist über den Speicher 401 des RFID Tags abrufbar.
In dieser Variante wird das digitale Zertifikat nicht auf dem RFID-Tag gespeichert, sondern es wird im elektronischen Lieferschein für jede Wareneinheit eingetragen. Die Prüfung auf Echtheit funktioniert wie in der vorhergegangenen Variante, mit dem Unterschied, dass das digitale Zertifikat nicht vom RFID-Tag eingelesen wird, sondern dem elektronischen Lieferschein entnommen wird.

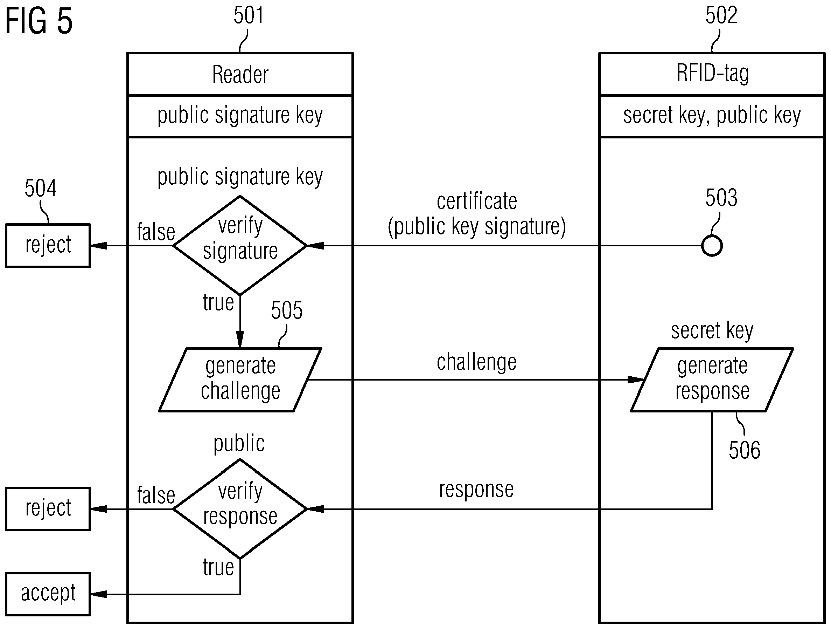

Die Figur 5 zeigt eine Ablaufdiagramm für ein Authentifizierungsprotokoll zwischen einem RFID Lesegerät 501 und einem RFID Tag 502. In diesem Ausführungsbeispiel ist das digitale Zertifikat auf dem RFID Tag 502 gespeichert. Im ersten Schritt 503 liest das RFID Lesegerät 501 das digitale Zertifikat aus dem RFID Tag 502. Das digitale Zertifikat umfasst zumindest den öffentlichen Schlüssel und eine digitale Signatur. Das RFID Lesegerät 501 verifiziert mit Hilfe eines öffentlichen Signaturschlüssels die digitale Signatur und damit das digitale Zertifikat. Bei einem negativen Verifizierungsergebnis 504 wird das RFID Tag nicht authentifiziert. Ist das Verifizierungsergebnis jedoch positiv 505, wird durch das RFID Lesegerät 501 eine Challenge auf Basis des öffentlichen Schlüssels generiert und an den RFID Tag übermittelt. Das RFID Tag 502 wiederum generiert auf Basis der erhaltenen Challenge und des geheimen Schlüssels eine Response 506, welche von dem RFID Lesegerät 501 ausgelesen wird. Das RFID Lesegerät 501 verifiziert die erhaltene Response mit Hilfe des öffentlichen Schlüssels des RFID Tags 501. Bei einem negativen Verifizierungsergebnis wird das RFID Tag 501 nicht authentifiziert 507. Bei einem positiven Verifizierungsergebnis wird das RFID Tag 501 durch das RFID Lesegerät authentifiziert.

Das vorgeschlagene Verfahren zur Plagiatschutzprüfung ist auch im Rahmen der Zollabfertigung im elektronischen Verfahren (Atlas= **A**utomatisiertes **T**arif- und **L**okales Zoll-**A**bwicklungs-**S**ystem) einsetzbar. Auf diese Weise lässt sich der Grenzübertritt von Plagiaten gezielt verhindern.

## Patentansprüche

1. Verfahren zum Überprüfen einer Ware als Originalware eines Warenherstellers durch Authentifikation mindestens eines der Ware zugeordneten Radio Frequency Identification Tags, RFID, unter Verwendung eines asymmetrischen Challenge-Response-Protokolls mit den Schritten:
- Auslesen eines Produktcodes aus dem RFID Tag durch einen RFID-Leser,
- Ermitteln eines dem ausgelesenen Produktcode zugeordneten elektronischen Lieferscheins,
- Generieren einer Challenge basierend auf einer Zufallszahl durch eine mit dem RFID-Leser gekoppelte RFID Middleware,
- drahtloses Übermitteln der generierten Challenge an das RFID-Tag durch den RFID-Leser,
- Ermitteln einer Response durch das RFID-Tag auf Basis der übermittelten Challenge und eines ersten geheimen kryptographischen Schlüssels, welcher dem RFID-Tag zugeordnet ist,
- Überprüfen der ermittelten Response zur Ermittlung eines Authentifikationsergebnisses durch die RFID Middleware basierend auf einem öffentlichen Schlüssel,
- Einschreiben des Authentifikationsergebnisses in den ermittelten elektronischen Lieferschein,
wobei der dem RFID-Tag zugeordnete öffentliche Schlüssel aus dem elektronischen Lieferschein entnommen wird.

2. System zum Überprüfen einer Ware als Originalware eines Warenherstellers durch Authentifikation mindestens eines der Ware zugeordneten Radio Frequency Identification Tags, RFID, unter Verwendung eines asymmetrischen Challenge-Response-Protokolls gemäß einem Verfahren nach Anspruch 1, aufweisend:
- ein RFID-Leser mit einem ersten Kommunikationsmodul zur drahtlosen Kommunikation mit dem RFID Tag,
- das RFID-Tag mit einem ersten Authentifizierungsmodul, welches zu einer empfangenen Challenge eine zugehörige Response ermittelt, und einem zweiten Kommunikationsmodul zur drahtlosen Kommunikation mit dem RFID-Leser,
- ein zweites Authentifizierungsmodul zum Generieren einer Challenge und Überprüfen der ermittelten Response, und
- eine RFID Middleware zum Bereitstellen von elektronischen Lieferscheinen;
wobei das zweite Authentifizierungsmodul der RFID Middleware zugeordnet ist.

3. System nach Anspruch 2, wobei
das RFID-Leser mit der RFID Middleware permanent verbunden ist und die elektronischen Lieferscheine auf Anforderung dem RFID-Leser bereitgestellt werden.

4. System nach Anspruch 2, wobei
das RFID-Leser mit der RFID Middleware verbindbar ist und bei einer bestehenden Verbindung elektronische Lieferscheine dem RFID-Leser bereitgestellt werden.

## Claims

1. Method for inspecting a product as an original product of a product manufacturer by authenticating at least one RFID (Radio Frequency Identification) tag assigned to the product, using an asymmetrical challenge response protocol comprising the steps:
- reading a product code from the RFID tag using an RFID reader,
- determining an electronic delivery note assigned to the read-out product code,
- generating a challenge based on a random number using an RFID middleware coupled to the RFID reader,
- transmitting the generated challenge wirelessly to the RFID tag using the RFID reader,
- determining a response by means of the RFID tag based on the challenge that has been transmitted and on a first secret cryptographic key that is assigned to the RFID tag,
- verifying the response that has been established to determine an authentication result by means of the RFID middleware based on a public key,
- importing the authentication result into the determined electronic delivery note,
wherein the public key assigned to the RFID tag is taken from the electronic delivery note.

2. System for inspecting a product as an original product of a product manufacturer by authenticating at least one RFID (Radio Frequency Identification) tag assigned to the product, using an asymmetrical challenge response protocol in accordance with a method according to claim 1, having:
- an RFID reader with a first communications module for wireless communication with the RFID tag,
- the RFID tag with a first authentication module that determines an appropriate response to a challenge that has been received, and a second communications module for wireless communication with the RFID reader,
- a second authentication module to generate a challenge and verify the determined response and
- an RFID middleware to provide electronic delivery notes;
wherein the second authentication module is assigned to the RFID middleware.

3. System according to claim 2, wherein
the RFID reader is permanently connected to the RFID middleware and the electronic delivery notes are provided to the RFID reader when requested.

4. System according to claim 2, wherein
the RFID reader is connectable to the RFID middleware, and where a connection exists, electronic delivery notes are provided to the RFID reader.

## Revendications

1. Procédé permettant de vérifier qu'un article est un article original du fabricant de l'article par l'authentification d'au moins une étiquette d'identification par radiofréquence (RFID) associée à l'article, à l'aide d'un protocole défi/réponse asymétrique, comprenant les étapes suivantes :
- lecture d'un code produit à partir de l'étiquette RFID par un lecteur RFID,
- détermination d'un bon de livraison électronique affecté au code produit lu,
- génération d'un défi basé sur un nombre aléatoire par un logiciel intermédiaire RFID couplé au lecteur RFID et transmission sans fil du défi généré à l'étiquette RFID par le lecteur RFID,
- détermination d'une réponse par l'étiquette RFID en fonction du défi transmis et d'une première clé cryptographique secrète affectée à l'étiquette RFID,
- vérification de la réponse établie pour déterminer un résultat d'authentification par le logiciel intermédiaire RFID sur la base d'une clé publique, et
- inscription du résultat d'authentification dans le bon de livraison électronique déterminé,
selon lequel la clé publique associée à l'étiquette RFID est prélevée à partir du bon de livraison électronique.

2. Système permettant de vérifier qu'un article est un article original du fabricant de l'article par l'authentification d'au moins une étiquette d'identification par radiofréquence (RFID) associée à l'article, à l'aide d'un protocole défi/réponse asymétrique selon un procédé selon la revendication 1, ledit système comprenant :
- un lecteur RFID comportant un premier module de communication permettant une communication sans fil avec l'étiquette RFID,
- l'étiquette RFID comportant un premier module d'authentification qui détermine une réponse correspondant à un défi reçu et un second module de communication permettant une communication sans fil avec le lecteur RFID,
- un second module d'authentification pour générer un défi et vérifier la réponse établie, et
- un logiciel intermédiaire RFID pour fournir les bons de livraison électroniques,
selon lequel le second module d'authentification est associé au logiciel intermédiaire RFID.

3. Système selon la revendication 2, selon lequel
le lecteur RFID est relié de façon permanente au logiciel intermédiaire RFID et les bons de livraison électroniques sont fournis sur demande au lecteur RFID.

4. Système selon la revendication 2, selon lequel
le lecteur RFID peut être relié au logiciel intermédiaire RFID et, lorsque la liaison est établie, des bons de livraison électroniques sont fournis au lecteur RFID.
